# EUROPEAN PATENT APPLICATION

(11) **EP 4 261 941 A1**
(43) Date of publication of application: **18.10.2023**
(21) Application number: 22168581.1
(22) Date of filing: 14.04.2022
(51) Int. Cl.: H01M 4/36

(54) **PRE-LITHIATED LITHIUM-SILICON-ALLOY MATERIAL ARRANGEMENT, AN ANODE COMPRISING THE SAME AND A METHOD TO MANUFACTURE OF A MATERIAL ARRANGEMENT**

(71) Applicant: Cellforce Group GmbH, 72072 Tübingen (DE)
(72) Inventor: Sommer, Heino, 76344 Eggenstein-Leopoldshafen (DE)
(74) Representative: Michalski Hüttermann & Partner Patentanwälte mbB

(57) **Abstract**

The invention relates to a lithium-silicon-alloy material arrangement, especially formed as a surface-coated lithium-silicon-alloy material arrangement, comprising: a silicon material substrate, with a silicon content from 30% to 94%, including 30% and 94%; and comprising at least one further element, especially a further element like Na, B, C, Al, Fe, Ni, Ti; a Li content from 3% to 25%, including 3% and 25%; and a surface coating which is at least partially applied on a surface area of the silicon material substrate, wherein the surface coating comprises at least one first surface coating layer comprising one or multiple elements of Li, Na, B, Al, Si, P, Ti, Fe and O.

## Description

The present disclosure relates to a lithium-silicon-alloy material arrangement, a method to manufacture a surface-coated lithium-silicon-alloy material arrangement, an anode electrode, a method to manufacture at least one anode electrode and to an electrochemical storage device.

Lithium-ion batteries are widely used and provide stored energy to different components. Especially in electric vehicles and in hybrid electric vehicles such lithium-ion batteries are supplying the vehicle components and the drivetrain with electrical energy. In such use cases a long electric driving range is highly desirable and can be achieved by increasing the capacity of the battery. The capacity of the battery may be increased by increasing the surface area of the electrodes. This is achieved by a more complex surface structure. Different methods are known for coating at least one of the current collectors of the anodes with silicon-carbon in order to increase the area for reversible lithium intercalation and the amount of lithium ions taking part during the charging and discharging procedure. Such complex surface structures and coatings may be prone to chemical reactions with compounds of the environment e.g. during the manufacturing of the lithium-ion cells. Especially during electrolyte filling of the lithium-ion cells parts of the anodes and their surface structures accidently can be exposed to harmful, e.g. oxidizing, substances.

Moreover, with a large number of cycles, lithium-ion batteries are still susceptible to capacity loss, due to formation of the solid electrolyte intermediate phase layer (SEI layer). Such SEI layer usually forms due to a reduction of organic solvents and anions on an electrode surface during charge and discharge cycles of the lithium-ion batteries. A relevant part of the SEI layer formation occurs during the first charge and discharge cycle.

An objective of the present disclosure is to provide a silicon-alloy material and a method for manufacturing a silicon-alloy material which comprises an improved chemical stability, which reduces the lithium losses for the formation of the SEI layer in the first cycles of an electrochemical device. This object is achieved by the subject-matter of the independent claims. Further developments of the subject-matter of the independent claims are provided in the sub-claims.

According to one aspect of the present disclosure a lithium-silicon-alloy material arrangement is provided. Such lithium-silicon-alloy material arrangement may be formed as a surface-coated lithium-silicon-alloy material arrangement. Especially, such lithium-silicon-alloy material arrangement may be utilized in an anode electrode and accordingly in an electrochemical storage device like a lithium-ion cell or battery.

The lithium-silicon-alloy material arrangement comprises a silicon material substrate, with a silicon content from 30% to 94%, including 30% and 94%. Furthermore, the lithium-silicon-alloy material arrangement comprises at least one further element, especially a further element like Na, C, B, Al, Fe, Ni, Ti. Moreover, the lithium-silicon-alloy material arrangement comprises a Li content from 3% to 25%, including 3% and 25%. Thus, the lithium-silicon-alloy material arrangement is provided in a pre-lithiated form, wherein at least one surface coating layer of a surface coating may comprise lithium ions. The silicon content and the lithium content can be defined in relation to the weight/mass or to the volume of the entire silicon-carbon composite material.

The lithium-silicon-alloy material arrangement also comprises a surface coating that is at least partially applied on a surface area of the lithium-silicon-alloy material arrangement. Preferably, the surface coating comprises at least one first surface coating layer comprising one or multiple elements of Na, B, Li, Al, Si, P, O, Fe and/or Ti.

Depending on the preferred application, the lithium-silicon-alloy may be present as the first surface coating layer on top of a silicon material substrate or a silicon base material. Such material can be provided as a plurality of particles which are each or in groups coated by the lithium-silicon-alloy material as a first surface coating layer.

In a further aspect of the invention, an anode electrode is provided, which comprises a surface-coated lithium-silicon-alloy material arrangement. The anode electrode can preferably comprise a current collector e.g. a metal foil. On one or on both sides of the current collector the lithium-silicon-alloy material arrangement can be provided for improved electrical characteristics of the anode electrode.

By providing at least one surface coating e.g. the first surface coating layer the chemical and mechanical stability of the surface-coated lithium-silicon-alloy material arrangement and thus of the anode electrode with such a material is improved. Especially, the surface coating can be applied via a chemical vapor deposition, like an atomic layer deposition process, or via chemical vapor infiltration. Such surface coating can also be applied onto materials with complex or uneven surface geometries.

Due to the introduced lithium into the surface-coated lithium-silicon-alloy material arrangement the lithium losses during formation of the SEI layer during the first charge and discharge cycles in the anode electrode with such a material is prevented or minimized. A SEI layer usually forms due to a reduction of organic solvents and anions on a surface of the anode electrode during charge and discharge cycles of an electrochemical cell. Since such organic solvents and anions are not present in the pre-lithiated lithium-silicon-alloy material arrangement, the SEI layer formation is minimized.

The lithium ions for the reversible lithium intercalation may bypass the first surface coating without remarkable decrease in corresponding kinetics when the at least partially applied first surface coating is formed as a layer with a thickness of 0.2 µm to 3 µm.

In accordance with a further embodiment the first surface coating layer and/or a second surface coating layer comprises at least one metal alloys from at least one or more of the Li, Na, B, Al, Si, P, Fe and/or Ti. For example suitable metal oxides may be formed as Al₂O₃ and/or LiAlO₂.

In a further embodiment the surface coating is covering at least 50% of the surface area of the lithium-silicon-alloy material arrangement. Thus, most of the surface area of the material can be protected by the surface coating. The surface area of the lithium-silicon-alloy material arrangement is defined as the entire surface area in its final form applied to an anode electrode. Thus, all or most of the surface of the lithium-silicon-alloy material arrangement which is not in contact with a current collector foil of the anode electrode can comprise the surface coating.

The surface coating of the lithium-silicon-alloy material arrangement may comprise multiple surface coating layers which may also at least partially cover the available surface area of the silicon-carbon composite material. Different surface coating layers may overlap each other at least partially. Thus, based on a further embodiment, the surface coating of the lithium-silicon-alloy material arrangement comprises a second surface coating layer. Depending on the requirements and on the preferred manufacturing process, the second surface coating layer is applied on top of the first surface coating layer, or the first surface coating layer is applied on top of the second surface coating layer. The second surface coating layer enables additional control of the chemical and mechanical stability of the lithium-silicon-alloy material arrangement.

In a further embodiment, the surface coating comprises a third layer for passivation, especially formed as a carbon coating. Such third surface coating layer may result in a reduced electrical resistance of the material in a transition area between the second surface coating layer and a current collector or a metal when utilizing the material in an electrode. Moreover such passivation layer may increase the electrical conductivity within the layers of the silicon-carbon composite material. In another embodiment, an additional step can be applied to further passivate the surface area or the silicon-carbon composite material by flushing dry atmosphere (O₂, N₂ or mixtures thereof) over the silicon-carbon composite material at elevated temperatures between 120 °C and 250 °C.

In a further embodiment the surface area of the lithium-silicon-alloy material arrangement is less than 20 m2/g. Thus, the first surface coating layer and/or the second surface coating layer can be efficiently applied onto a material with an increased surface area due to its porous carbon scaffold.

According to a further aspect of the invention a method to manufacture a surface-coated lithium-silicon-alloy material arrangement is provided. In a method step a silicon material substrate with a silicon content of 30 to 99,5% is provided. Furthermore, a Li or Na compound is applied on the surface area of the silicon material substrate. At least one additional compound comprising Si, Fe, Ni, and/or Ti is applied on the surface area of the silicon material substrate in order to provide a chemical reaction with the Li compound in order to form a first surface coating layer. Thus, the pre-lithiation of the material is provided via the first surface coating layer. The at least one additional compound can be applied via chemical vapor infiltration, Thus, a lithium-silicon-alloy material may be formed, wherein the lithium-silicon-alloy material can be formed as the first surface coating layer coating silicon material substrate or substrate particles.

In a further step at least one second surface coating layer is applied at least partially. The at least one second surface coating layer comprises lithium oxides or silicon oxides or aluminum oxides or zirconium oxides or niobium oxides or tungsten oxides or a mixtures of the aforementioned oxides. After providing the above mentioned steps a surface-coated lithium-silicon-alloy material arrangement is formed. Preferably, the application of the first surface coating layer and the application of the second surface coating layer may be performed in any order. Thus, the first surface coating layer may be applied or formed initially or after the formation of the second surface coating layer.

By providing a surface coating which comprises silicon oxides or aluminum oxides or zirconium oxides the lithium-silicon-alloy material can be protected against unintentional chemical reaction like uncontrolled oxidation processes. Especially, while manufacturing battery cells or electrochemical storage devices an electrode comprising the surface coated silicon-carbon composite material will provide an improved chemical stability and reduced likelihood to unwanted chemical reactions due to the at least partial surface coating.

In order to introduce lithium into the first surface coating layer the Li or Na compound is applied as LiAlH₄ or NaBH₄ and is introduced on the surface of the silicon material substrate via a solution-based method or via a dry coating method. E.g. after heating the resulting material e.g. with 450°C the solvent can be removed and gaseous byproducts like CH₄ and H₂ may evaporate, too. Thus only Li ions of the LiAlH₄ may remain. Alternatively, the LiAlH₄ is introduced in form of a dry coating onto the surface area of the silicon material substrate, e.g. via calendaring.

Based on the application and the requirement, the Li compound can be formed as LiBH₄, NaBH₄ and/or LiFePO4.

In a further embodiment of the method, at least one third surface coating layer is applied in order to form a passivation layer. The third surface coating may be formed as a carbon layer. Alternatively or additionally, oxygen or a mixture comprising oxygen and nitrogen may be introduced in order to form SiO₂ as a passivation and protection layer.

Moreover, the at least one additional compound is applied as silane (SiH₄) after applying LiAlH₄. Thus, LiAlH₄ and SiH₄ may react to Li-Al-Si while forming H₂ which can dissipate.

In an embodiment, the at least one second surface coating layer of the surface coating of the silicon material substrate is applied via a gas phase deposition method. Thus, methods like atomic layer deposition or molecular layer deposition can be carried out in order to provide a surface coating with a controlled and uniform layer thickness.

Based on an embodiment, at least one second surface coating layer is applied at least partially on the surface area of the silicon material substrate by mixing the silicon material substrate with a compound from at least one or more of the elements Li, Na, Fe, B, Al, P, Ti, Zr, Nb, W.

In accordance with a further embodiment, the s second surface coating layer of the surface area of the silicon material substrate comprises at least one metal oxide from at least one of the elements B, Al, Si, Zr, Nb, W and/or Li. Thus, in case of an atomic layer deposition or molecular layer deposition the metal oxides are utilized as precursors.

Alternative or additional precursors may be formed as ZrO₂, TiO₂, Al₂O₃, SiNₓ, TaNₓ etc. Furthermore, molecules like Nb(OEt)₅ or Li-N(SiMe₃)₂ can be introduced in order to precisely control the chemical composition of the at least one surface coating. Thus, the method for manufacturing of the surface-coated lithium-silicon-alloy material arrangement comprises a plurality of possible materials for adjustment of the chemical and mechanical properties of the surface coating.

In another embodiment suitable metal oxides may be formed as ZrO₂ or/and Li₂ZrO₃ or mixtures of Al₂O₃, ZrO₂ and mixed lithium aluminum oxides and lithium zirconium oxides.

Appropriate surface coatings can be applied via atomic layer deposition (ALD) process of trimethylaluminum and water or oxygen (subsequent two or more ALD cycles) at temperature between 100 °C and 450 °C, optionally followed by a chemical reaction of the resulting aluminum oxide and aluminum hydroxides with a lithium compound like Li-N(SiMe₃)₂ to form a lithiated metal oxide. Such coatings can also be applied in combination with heat exposure and/or in combination with a catalyst. In another embodiment the surface coating layer can be applied by of mixing a metal oxide compound (Al₂O₃, Zr(OH)₄, ZrO(OH)₂ with lithium compounds, followed by a heat treatment step an temperature higher than 200 °C.

In a further embodiment a method is provided, wherein the surface area of the silicon material substrate or a surface area of the first surface coating layer is treated with a metal alkoxide or metal amide or alkyl metal compound to form a processed compound layer on the surface area; and wherein the processed compound layer on the surface area is treated with moisture or oxygen or ozone in order to form the at least one second surface coating layer.

Based on a further embodiment, the treatment of the surface area of the silicon material substrate or a surface area of the first surface coating layer with a metal alkoxide or metal amide or alkyl metal compound to form a processed compound surface and the treating of the treatment of the processed compound surface with moisture or oxygen or ozone are repeated at least once. Thus, the formation of an even coating of the surface area of the lithium-silicon-alloy material arrangement without leaving any unwanted traces of the processed compounds e.g. AlCH₃ can be ensured.

In a further embodiment, the at least one surface coating of the lithium-alloy-carbon material or lithium-silicon-carbon composite material is treated with a metal alkoxide or metal amide or alkyl metal compound to form a processed compound surface on the surface area of the silicon-carbon composite material, wherein the processed compound surface is treated with moisture or oxygen or ozone in order to form the at least one layer of the first surface coating layer. Such materials for formation of the processed compound surface are widely used and thus can be provided in a cost efficient manner. For example trimethylaluminum can be utilized in order to form the processed compound surface.

At least one surface coating layer of the surface area of the lithium-silicon-alloy material arrangement is formed with lithium content in a further embodiment. Thus, by providing lithium, e.g. as LiAI02 besides Al₂O₃ the molecules channels for faster lithium ion exchange between an electrolyte and the silicon-carbon composite material of an electrode can be introduced. Preferably, the lithium may be introduced into a surface coating of the surface area of the silicon material substrate and/or into the silicon material substrate.

The manufacturing method can be accelerated if the at least one first surface coating layer and/or the at least one second surface coating layer is applied on the surface area of the silicon material substrate at a temperature in a range of 150 °C to 450 °C. This method step can be performed in a protective atmosphere, e.g. like nitrogen or an inert gas.

Based on a further embodiment, the treatment of the silicon material substrate or of the first surface coating layer with a metal alkoxide or metal amide or alkyl metal compound to form a processed compound surface and the treating of the treatment of the processed compound surface with moisture or oxygen or ozone are repeated at least once. Thus, the formation of an even coating of the surface area of the lithium-silicon-alloy material arrangement without leaving any unwanted traces of the processed compounds e.g. AlCH₃ can be ensured.

Based on a further aspect of the invention, a method for manufacturing at least one anode electrode is provided. In a step, a current collector is provided. Furthermore, an inventive surface-coated lithium-silicon-alloy material arrangement is arranged at least partially on at least one side of the current collector.

Based on a further aspect of the invention, a method for manufacturing at least one anode electrode is provided. In a step, a silicon material, especially a surface-coated lithium-silicon-alloy material arrangement, is mixed with at least one carbon material. The silicon material is combined with an aqueous and/or a non-aqueous binder solution in order to form an electrode paste. The electrode paste is applied to a current collector, e.g. a conductor foil. The current collector with the applied electrode paste are dried at a temperature of 100 °C to 140 °C thereby forming at least one anode electrode. The current collector may be formed as a foil made of a material which is electrically conductive.

As a binder a styrene-butadiene gum/carboxymethylcellulose (CMC/SBR) blend, a polyacrylic acid (PAA) and/or a lithium polyacrylic (LiPAA) or a sodium polyacrylic (NaPAA) may be utilized. In an alternative embodiment, the binder is formed as a fluoropolymer such as a polytetrafluoroethylene (PTFE), a perfluoroalkoxy polymer resin (PFA), a fluorinated ethylene propylene (FEP), a polyethylene tetrafluoroethylene (ETFE), a polyvinyl fluoride (PVF), a polyethylene chlorotrifluoroethylene (ECTFE), a (polyvinylidene fluoride (PCDF), a (polychlorotrifluoroethylene (PCTFE), a trifluoroethanol, or combinations of at least one of these materials with at least one other material. In a further embodiment, a binder is a polyimide or a copolymer of polyacrylic acid and styrene-butadiene. Further possible binders may be formed as methyl methacrylate or as polyvinylidene difluoride.

Depending on the preferred application, according to a further aspect of the invention, a manufacturing process for the anode electrode can also be performed based on dry or semi-dry lithium-silicon-alloy material arrangement mixture.

In a first step a dry silicon material substrate is combined with a binder powder and comprises graphite particles and/or carbon black particles is provided. The binder powder may be formed as PTFE powder.

Optionally 5% to 10% of ethylene carbonate can be added to the mixture.

Then, the resulting mixture combined with the binder powder is applied via calendering at least partially on at least one surface of a conductor foil or current collector. In a further step, at least one surface coating is applied on a surface area of the silicon-carbon composite material forming the surface-coated lithium-silicon-alloy material arrangement, wherein the at least one surface coating comprises aluminum oxides or zirconium oxides and covers the surface area of the lithium-silicon-alloy material arrangement at least partially.

The conductor foil with the applied dry or semi-dry electrode paste is then dried at a temperature of e.g. 100 °C to 140 °C forming the at least one anode electrode.

In a further aspect of the invention an electrochemical storage device, especially formed as a lithium-ion-battery or lithium-ion-battery cell, is provided. The electrochemical storage device comprises at least one inventive anode electrode, at least one cathode electrode, a separator disposed between the cathode electrode and the anode electrode, and an electrolyte comprising lithium ions. The cathode electrode preferably comprises a transition metal oxide. Preferably, the components of the electrochemical storage device are positioned inside a housing or case, e.g. aluminum pouch.

By utilizing an anode electrode with the surface-coated lithium-silicon-alloy material arrangement the requirements on a dry room environment for manufacturing the electrochemical storage device can be reduced due to the surface protected anode electrode.

In a further aspect of the invention a usage of an anode electrode is provided in an inventive electrochemical storage device.

The present disclosure will be explained in more detail below on the basis of schematic embodiments shown in the accompanying drawings:
- Fig. 1: shows an exemplary diagram illustrating a method for manufacturing a surface-coated lithium-silicon-alloy material arrangement according to an embodiment of the invention,
- Fig. 2: shows an exemplary electrochemical storage device with a manufactured electrode anode comprising a surface-coated lithium-silicon-alloy material arrangement, and
- Fig. 3: shows an exemplary electrochemical storage device according to a further embodiment with a manufactured electrode anode comprising a surface-coated lithium-silicon-alloy material arrangement.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

Unless the context requires otherwise, throughout the present specification and claims, the word "comprise" and variations thereof, such as, "comprises" and "comprising" are to be construed in an open, inclusive sense, that is, as "including, but not limited to". In the present description, any concentration range, percentage range, ratio range, or integer range is to be understood to include the value of any integer within the recited range and, when appropriate, fractions thereof (such as one tenth and one hundredth of an integer), unless otherwise indicated. As used herein, the terms "about" and "approximately" mean ± 20%, ± 10%, ± 5% or ± 1% of the indicated range, value, or structure, unless otherwise indicated. It should be understood that the terms "a" and "an" as used herein refer to "one or more" of the enumerated components. The use of the alternative (e.g., "or") should be understood to mean either one, both, or any combination thereof of the alternatives.

Reference throughout this specification to "one embodiment" or "an embodiment" means that a particular feature, structure or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Unless defined otherwise, all technical and scientific terms used herein have the same meaning as is commonly understood by one of skill in the art to which this disclosure belongs. As used in the specification and claims, the singular form "a", "an" and "the" include plural references unless the context clearly dictates otherwise.

The term carbon portion of the silicon-carbon composite materials refers to a material or substance consisting of carbon or at least comprising carbon. In this regard, a carbon material may comprise high purity, amorphous and crystalline materials. A carbon material may be an activated carbon, a pyrolyzed dried polymer gel, a pyrolyzed polymer cryogel, a pyrolyzed polymer xerogel, a pyrolyzed polymer aerogel, an activated dried polymer gel, an activated polymer cryogel, an activated polymer xerogel, an activated polymer aerogel, or a combination thereof. In a further embodiment, a carbon is producible by a pyrolysis of coconut shells or other organic waste. In this regard, a polymer is a molecule comprising two or more repeating structural units. A porous carbon, also known as a porous carbon material, offers the advantage that it is usually easy to produce, usually has low impurities and a large pore volume. As a result, a porous carbon exhibits good electrical conductivity and high mechanical and chemical stability. In one embodiment, the carbon material has a high micropore volume ratio. Typically, the porous carbon has a pore space, also referred to as a pore volume, wherein the pore space is a group of voids (pores) in the carbon that is fillable with a gas or fluid. In this regard, properties of porous carbon, and manufacturing methods are described in the prior art, for example US Publication No. 2017 / 0015559, the full disclosure of which is hereby incorporated by reference in its entirety for all purposes.

The Si portion of the silicon-carbon composite materials may be pure silicon or a material composition comprising silicon. For example, the Si portion may be at least one alloy. An alloy may be a silicon-titanium alloy (Si-Ti), a silicon iron alloy (Si-Fe), a silicon nickel alloy (Si-Ni). In a further embodiment, the Si portion may consist of P-dopants, As-dopants or N-dopants. A P-dopant is usually a phosphorus dopant, an As-dopant is usually an arsenic dopant and an N-dopant is usually a nitrogen dopant.

The surface area for the silicon-carbon composite materials is determined e.g. by a Thermogravimetric analysis to determine its silicon content. Silicon-carbon composite materials may also be tested in half-cell coin cells. The anode for the exemplary half-cell coin cell can comprise 60-90% silicon-carbon composite, 5-20% Na-CMC (as binder) and 5-20% Super C45 (as conductivity enhancer), and the electrolyte can for example comprise 2:1 ethylene carbonate, diethylene carbonate, 1 M LiPF6 and 10% fluoroethylene carbonate. The half-cell coin cells can be cycled at 25 °C at a rate of C/5 for 5 cycles and then cycled thereafter at C/10 rate. The voltage can be cycled between 0 V and 0.8 V, alternatively, the voltage can be cycled between 0 V and 1.5 V. From the half-cell coin cell data, the maximum capacity can be measured, as well as the average Coulombic efficiency (CE) over the range of cycles from cycle 7 to cycle 20.

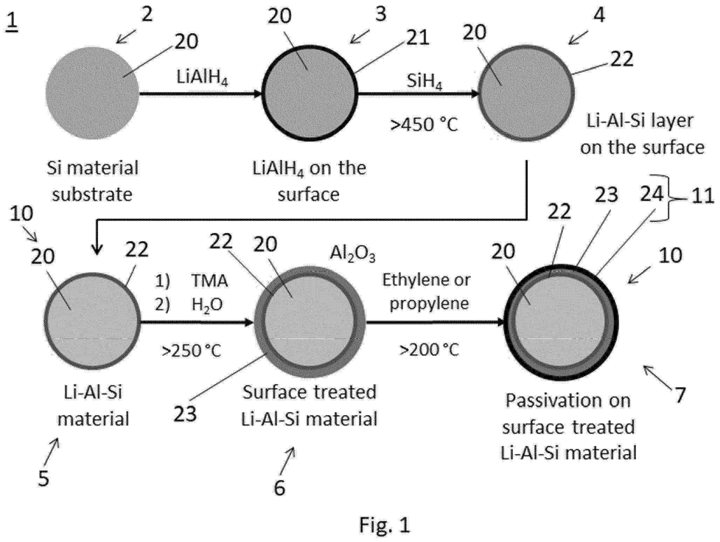

Fig. 1 shows an exemplary diagram illustrating a method 1 for manufacturing a surface-coated lithium-silicon-alloy composite material 10 according to an embodiment of the invention. In the shown embodiment, the lithium-silicon-alloy material arrangement 10 is formed as a silicon material substrate 20 which is surface coated with a Li-Al-Si material as a first surface coating layer 21.

In a first exemplary method step 2 a silicon material substrate 20 with a silicon content of 30 to 99,5% is provided. Then, in a further method step 3, a Li compound 21 is applied on the surface area of the silicon material substrate 20.

The Li compound 21 is applied as LiAlH₄ and is introduced on the surface of the silicon material substrate 20 e.g. via a solution-based method or via a dry coating method. For example after application of the LiAlH₄ via a solution-based method the Li compound 21 can be heated e.g. to 450°C such that the solvent and possible gaseous byproducts like CH₄ and H₂ may evaporate. In the described embodiment, in a further step 4, one additional compound is applied to the Li compound 21 which is formed as coating of the silicon material substrate 20.

The at least one additional compound is applied as silane SiH₄ after applying LiAlH₄. Thus, LiAlH₄ and SiH₄ may react to Li-Al-Si while forming H₂ which can dissipate. This reaction forms the first surface coating layer 22 which is formed as at least one Li-Al-Si layer. The first surface coating layer 22 is part of a surface coating 11 of the silicon material substrate 11.

In a further embodiment of the method, at least one third surface coating layer is applied in order to form a passivation layer. The third surface coating may be formed as a carbon layer. Alternatively or additionally, oxygen or a mixture comprising oxygen and nitrogen may be introduced in order to form SiO₂ as a passivation and protection layer.

Thus, the first surface coating layer 22 may act as a pre-lithiation of the silicon material substrate 20. The at least one additional compound can be applied via chemical vapor infiltration, This method step 4 forms a lithium-silicon-alloy material arrangement 10 which comprises the surface coating 11 with the first surface coating layer 22 coating the silicon material substrate 20 as an entire material or substrate particles of the silicon substrate material 20.

The silicon substrate material 20 may comprise different particles and compounds and may also be formed as a compound in order to meet specific requirements with regard to its application e.g. in battery cell applications.

In the following method steps 5, 6 at least partially on a surface area of the first surface coating layer 22 a second surface coating layer 23 is applied. The silicon material substrate 20 with the applied first surface coating layer 22 formed as Li-Al-Si material as the lithium-silicon-alloy material is provided and utilized as a basis for a thermal atomic layer deposition in order to form the second surface coating layer 23.

Preferably the second surface coating layer 23 may comprise one or multiple elements from the group elements Li, Na, Al, Zr, Nb, W.

The lithium-silicon-alloy material of the first surface coating layer 22 is treated with a metal alkoxide or metal amide or alkyl metal compound in order to form a processed compound layer (not shown). In the shown embodiment, the surface area of the lithium-lithium-silicon-alloy material 22 is covered with trimethylaluminum TMA. During the exposure of the surface area to the trimethylaluminum it dissociatively chemisorbs on the surface area of the lithium-silicon-alloy material 22 and any remaining trimethylaluminum which is in gas-phase can be removed easily.

The dissociative chemisorption of trimethylaluminum TMA results in a processed compound surface which is covered with AlCH₃ molecules. This processed compound surface is treated with moisture H₂O or oxygen O₂ or ozone O₃ in order to form the at least one second surface coating layer 23 of surface coating 11.

This second surface coating layer 23 consists of of Al₂O₃ molecules since the treatment leads to a chemical reaction of the CH₃ of the processed compound surface. Such coating may be provided with thermal atomic layer deposition which also requires a temperature increase, e.g. above 250°C.

In an optional method step 7, a third surface coating layer 24 can be applied on top of the second surface coating layer 23. In the illustrated example, the third surface coating layer 24 is formed as a passivation layer and consists of a carbon material.

The first surface coating layer 22, the second surface coating layer 23 and the third surface coating layer 24 are forming the surface coating 11 of the lithium-silicon-alloy material arrangement 10.

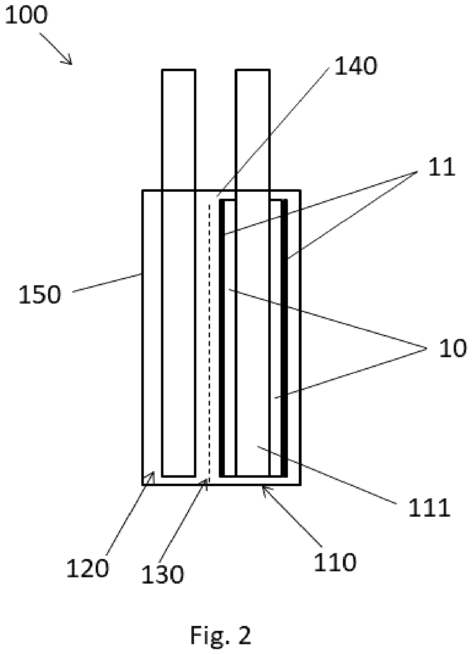

Fig. 2 shows a sectional view of an exemplary electrochemical storage device 100 with an electrode anode 110 comprising a surface-coated lithium-silicon-alloy material arrangement 10 manufactured with a method illustrated in Fig. 1.

The electrochemical storage device 100 is formed as a lithium-ion-battery cell. The electrochemical storage device 100 comprises at least one anode electrode 110, at least one cathode electrode 120 and a separator 130 disposed between the cathode electrode 120 and the anode electrode 110. The cathode electrode preferably comprises a transition metal oxide.

Furthermore an electrolyte 140 comprising lithium ions is provided in a cell housing 150 of the electrochemical storage device 100. The electrochemical storage device 100 can be formed as a lithium-ion-battery cell in a pouch form. Thus, the cell housing 150 may be formed as a aluminum bag. The anode electrode 110, the cathode electrode 120 and the separator 130 are arranged in the cell housing 150, too.

It is noted that Fig. 2 shows a simplified sectional view. The anode electrode 110, the cathode electrode 120 and the separator 130 are usually formed as multiple layers which are winded or folded in order to optimize packaging and in order to increase the possible surface area of the electrolyte 140. In the shown example, only one layer of the components is visible for illustrational purpose.

The anode electrode 110 is coated on both sides with a surface-coated lithium-silicon-alloy material arrangement 10. The surface coating 11 of the surface-coated lithium-silicon-alloy material arrangement 10 is performed on surface areas of the lithium-silicon-alloy material arrangement 10 which are not in contact with a current collector 111 of the anode electrode 110.

By utilizing an anode electrode 110 with the surface-coated lithium-silicon-alloy material arrangement 10 the requirements on a dry room environment for manufacturing the electrochemical storage device 100 can be reduced. Especially during infill of the electrolyte 140 into the cell housing 150 the chemical interaction of the electrode anode with contaminants can be reduced or prevented due to the surface protection via the surface coating 11.

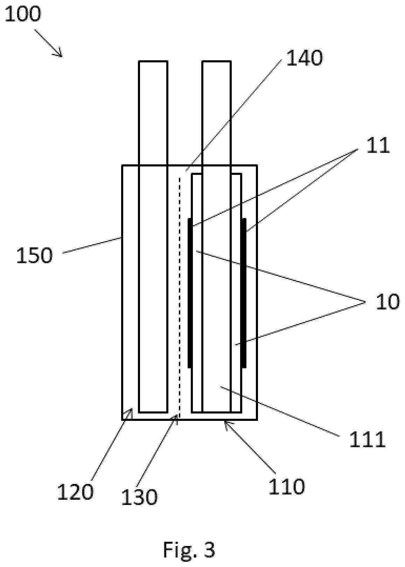

In Fig. 3 a further exemplary electrochemical storage device 100 is shown. The electrochemical storage device 100 comprises an electrode anode 110 with a surface-coated lithium-silicon-alloy material arrangement 10. In contrast to the embodiment shown in Fig. 2, the surface coating 11 of the lithium-silicon-alloy material arrangement 10 is applied partially on the surface are of the lithium-silicon-alloy material arrangement 10 such that parts of the surface area of the lithium-silicon-alloy material arrangement 10 remain without the surface coating 11.

## Claims

1. A lithium-silicon-alloy material arrangement (10), especially formed as a surface-coated lithium-silicon-alloy material, comprising:
- a silicon material substrate (20), with a silicon content from 30% to 94%, including 30% and 94%; and comprising at least one further element, especially a further element like Na, C, B, Al, Fe, Ni, Ti;
- a Li content from 3% to 25%, including 3% and 25%;
- and a surface coating (11) which is at least partially applied on a surface area of the silicon material substrate (20), wherein the surface coating (11) comprises at least one first surface coating layer (22) comprising one or multiple elements of Li, Na, B, Al, Si, P, O, Fe and Ti.

2. Material arrangement of claim 1, wherein the at least one first surface coating layer (22) of the surface coating (11) comprises a layer thickness in the range of 0.2 µm to 3 µm.

3. Material arrangement according to claim 1 or 2, wherein the at least one first surface coating layer (22) comprises metal-alloys from at least one of the elements Li, Na, B, Al, Si, P, Fe and/or Ti.

4. Material arrangement according to claim 1 to 3, wherein a second surface coating layer (23) comprises metal-alloys and metal oxides from at least one of the elements Li, Na, B, Al, Si, P, Fe, Ti, Nb, Zr and/or W.

5. Material arrangement according to anyone of claims 1 to 4, wherein at least 50% of the surface area of the lithium-silicon-alloy material arrangement (10) is covered with the surface coating (11).

6. Material arrangement according to anyone of claims 1 to 5, wherein the surface coating (11) of the lithium-silicon-alloy material arrangement (10) comprises a second surface coating layer (23), wherein the second surface coating layer (23) is applied on top of the first surface coating layer (22), or wherein the first surface coating layer (22) is applied on top of the second surface coating layer (23).

7. Material arrangement according to anyone of the claims 1 to 6, wherein the surface coating (11) comprises a third layer (24) for passivation, for example formed as a carbon coating.

8. Material arrangement according to anyone of claims 1 to 7, wherein the surface area of the lithium-silicon-alloy material arrangement (10) is less than 20 m²/g.

9. A method (1) to manufacture a surface-coated lithium-silicon-alloy material arrangement (10) according to anyone of the claims 1 to 8, wherein
- a silicon material substrate (20) with a silicon content of 30 to 99,5% is provided;
- a Li or Na compound (21) is applied on the surface area of the silicon material substrate (20); and
- at least one additional compound comprising Si, Fe, Ni, and/or Ti is applied on the surface area of the silicon material substrate (20) in order to provide a chemical reaction with the Li compound in order to form a first surface coating layer (22); and
- at least one second surface coating layer (23) is applied at least partially, wherein the at least one second surface coating layer (23) comprises lithium oxides or silicon oxides or aluminum oxides or zirconium oxides or niobium oxides or tungsten oxides or a mixtures of the aforementioned oxides.

10. Method according to claim 9, wherein the Li or Na compound (21) is applied as LiAlH₄ or NaBH₄ and is introduced on the surface of the silicon material substrate (20) via a solution-based method or via a dry coating method.

11. Method according to claim 9 or 10, wherein at least one third surface coating layer (24) is applied in order to form a passivation layer.

12. Method according to anyone of the claims 9 to 11, wherein at least one additional compound is applied as silane (SiH₄).

13. Method according to anyone of the claims 9 to 12, wherein at least one second surface coating layer (23) is applied at least partially on the surface area of the silicon material substrate (20) via a gas phase deposition method.

14. Method according to anyone of the claims 9 to 12, wherein at least one second surface coating layer (23) is applied at least partially on the surface area of the silicon material substrate (20) by mixing the silicon material substrate (20) with a compound from at least one or more of the elements Li, Na, B, Al, P, Ti, Fe, Zr, Nb, W.

15. Method according to anyone of claims 9 to 14, wherein the second surface coating layer (23) of the surface area of the silicon material substrate (20) comprises at least one metal oxide from at least one of the elements Li, B, Al, Si, Zr, Nb and W.

16. Method according to anyone of the claims 9 to 15, wherein the surface area of the silicon material substrate (20) or a surface area of the first surface coating layer (22) is treated with a metal alkoxide or metal amide or alkyl metal compound to form a processed compound layer on the surface area; and wherein the processed compound layer on the surface area is treated with moisture or oxygen or ozone in order to form the at least one second surface coating layer (23).

17. Method according to anyone of claims 9 to 16, wherein lithium is introduced into a surface coating (11) of the surface area of the silicon material substrate (20) and/or into the silicon material substrate (20).

18. Method according to anyone of claims 9 to 17, wherein the at least one first surface coating layer (22) and/or the at least one second surface coating layer (23) is applied on the surface area of the silicon material substrate (20) at a temperature in a range of 150 °C to 450 °C.

19. Method according to claim 16, wherein the treatment of the silicon material substrate (20) or of the first surface coating layer (23) with a metal alkoxide or metal amide or alkyl metal compound in order to form a processed compound layer and the treatment of the processed compound layer with moisture or oxygen or ozone are repeated at least once.

20. An anode electrode (110), comprising a current collector (111) and a surface-coated lithium-silicon-alloy material arrangement (10) according to anyone of the claims 1 to 8, wherein the surface-coated lithium-silicon-alloy material arrangement (10) is arranged at least partially on at least one side of the current collector (111).

21. A method to manufacture at least one anode electrode (110) according to claim 20, wherein
- a silicon material, especially a surface-coated lithium-silicon-alloy material arrangement (10), is mixed with at least one carbon material,
- the silicon material is combined with an aqueous and/or a non-aqueous binder solution in order to form an electrode paste,
- the electrode paste is applied to a current collector, e.g. a conductor foil,
- the current collector with the applied electrode paste are dried at a temperature of 100 °C to 140 °C thereby forming at least one anode electrode.

22. An electrochemical storage device (100), especially formed as a lithium-ion-battery, comprising:
- at least one anode electrode (110), according to any one of claim 20;
- at least one cathode electrode (120), comprising a transition metal oxide;
- a separator (130) disposed between the cathode electrode (120) and the anode electrode (110); and
- an electrolyte (140) comprising lithium ions.
